# EUROPEAN PATENT SPECIFICATION

(11) **EP 4 571 866 B1**
(45) Date of publication and mention of the grant of the patent: **21.10.2026**
(21) Application number: 23912629.5
(22) Date of filing: 01.12.2023
(51) Int. Cl.: H01M 4/04, H01M 4/139, H01M 4/13, B05C 5/02, B05C 1/08

(54) **METHOD AND DEVICE OF MANUFACTURING ELECTRODE FOR SECONDARY BATTERY**
VERFAHREN UND VORRICHTUNG ZUR HERSTELLUNG EINER SEKUNDÄRBATTERIEELEKTRODE
PROCÉDÉ ET DISPOSITIF DE FABRICATION D'ÉLECTRODE DE BATTERIE SECONDAIRE

(30) Priority: 26.12.2022 KR 20220185030
(43) Date of publication of application: 18.06.2025
(73) Proprietor: LG Energy Solution, Ltd., Seoul 07335 (KR)
(72) Inventor: PARK, Seung-Seo, Daejeon 34122 (KR); JANG, Ji-Woong, Daejeon 34122 (KR)
(74) Representative: Goddar, Heinz J.
(86) International application number: PCT/KR2023/019725
(87) International publication number: WO 2024/143954

(56) References cited:
- WO-A1-2017/163846
- JP-A- 2006 313 655
- JP-B2- 3 162 026
- JP-B2- 6 116 015
- KR-A- 20160 036 998
- KR-A- 20200 035 642
- KR-A- 20220 058 066
- US-A1- 2015 125 732
- US-A1- 2021 313 553

## Description

### TECHNICAL FIELD

The present disclosure relates to a method and device of manufacturing an electrode for a secondary battery, and more specifically, to a method including the step of coating a current collector with a slurry containing an electrode active material and a device capable of performing this method. The present application claims priority to Korean Patent Application No. 10-2022-0185030 filed on December 26, 2022, in the Republic of Korea.

### BACKGROUND ART

Secondary batteries have high applicability according to product groups and electrical characteristics such as high energy density, and thus are commonly applied not only to portable devices but also to electric vehicles or hybrid electric vehicles, electric power storage devices, and the like driven by electric power sources. Such secondary batteries are attracting attention as a new energy source to improve eco-friendliness and energy efficiency in that it has not only a primary advantage of dramatically reducing the use of fossil fuels, but also no by-products generated from the use of energy.

Such secondary batteries are known as lithium-ion batteries, lithium polymer batteries, nickel cadmium batteries, nickel hydrogen batteries, nickel zinc batteries, and the like, and multiple battery cells may be connected in series or in parallel to form one battery module or battery pack. Among them, lithium-ion batteries are widely used in IT devices and electric vehicles due to their long life and easy charging. Depending on the shape of the battery case, lithium-ion batteries may be classified into can-type secondary batteries in which the electrode assembly is embedded in a metal can and pouch-type secondary batteries in which the electrode assembly is embedded in a pouch case of an aluminum laminate sheet. In addition, they are also divided into cylindrical cells and prismatic cells according to the shape of the metal can.

Also, the electrode assembly embedded in the battery case is a power generation element that can be charged and discharged having a stacked structure of positive electrode/separator/negative electrode, and may include a jelly-roll type electrode assembly wound with a separator interposed between the long sheet-like positive electrode and negative electrode coated with an active material, a stacked electrode assembly in which multiple positive electrodes and negative electrodes cut into units of a predetermined size are sequentially stacked with a separator interposed therebetween, and a stacked/folded electrode assembly with a structure of winding bi-cells or full cells in which a predetermined unit of positive electrodes and negative electrodes are stacked with a separator interposed therebetween.

The electrodes, which are the positive electrode and negative electrode of such an electrode assembly, are manufactured by coating a slurry containing an electrode active material on a current collector in a predetermined pattern and at a certain thickness to form an electrode active material layer, then drying and rolling, and a slot die coater including a shim may be used for the slurry coating.

KR 20160036998 A discloses a secondary battery and a manufacturing method thereof, wherein the roughness of at least one from an application surface of the anode current collector with the anode active material layer applied therein and an application surface of the cathode current collector with the cathode active material layer applied therein is formed through a roughness formation process to increase contact areas with the active material layers applied on the current collectors.

KR 20220058066 A discloses an electrode manufacturing device to form a coated unit and an uncoated unit on a current collector. The electrode manufacturing device includes a coating material dispensing device, and a coating roll disposed adjacent the coating material dispensing device. The flatness of the surface of the coating roll corresponding to the coated unit and the flatness of the surface of the coating roll corresponding to the uncoated unit are different from each other.

However, since slurry is a fluid, it has the property of flowing down after coating, and the flowing down of slurry is called sliding.

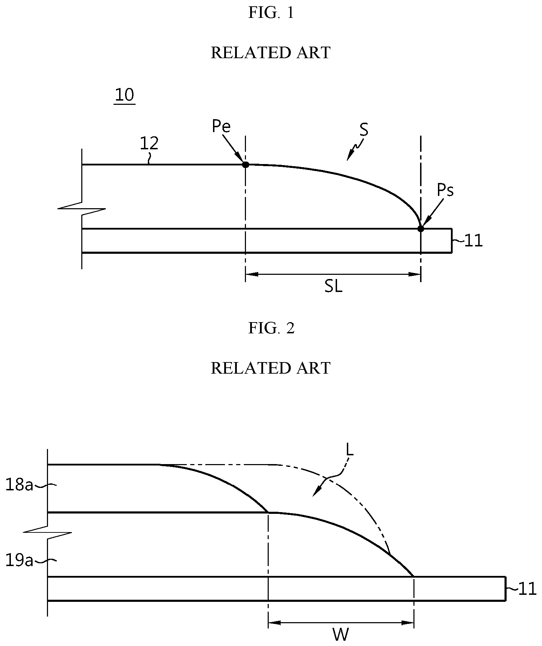

FIG. 1 shows a portion of a cross-section of an electrode sheet 10 coated with slurry on one surface of a current collector and illustrates a state in which sliding occurs.

Referring to FIG. 1, an electrode active material layer 12 is formed on the current collector 11, and an electrode sliding S phenomenon, in which a portion of the slurry flows down from the edge portion of the electrode active material layer and thus the thickness of the electrode active material layer 12 gradually becomes thinner toward the side, is shown.

This sliding may occur frequently at both ends of the coated portion in the width direction, which is the part coated with the slurry, and the sliding causes non-uniform loading. And, the sliding causes non-uniformity during rolling, and further results in the NP ratio, which is the face-to-face ratio of the negative electrode active material layer to the positive electrode active material layer, not satisfying the design conditions. The discharge capacity ratio between the positive electrode and negative electrode in the flat section of the coating remains the same as the design value, but sliding is formed at the location where the edge portion of the positive electrode and the edge portion of the negative electrode face each other, thereby distorting the discharge capacity ratio and making stability vulnerable. For this reason, it is necessary to control sliding in the slurry coating process, and in particular, it is necessary to manage the shape control of the boundary surface (sliding part) when coating a stripe pattern through a slot die coater, especially to manage the sliding length.

As shown in FIG. 1, the general shape of the sliding S part in the electrode profile is shown that the thickness increases as the width distance from the starting point Ps of the coating portion increases, but at a certain width distance or more, the thickness increase rate gradually decreases and results in a flat shape with little increase in thickness, and is close to a shape that converges to a constant value. The sliding length SL can be defined as the width distance from the point Ps where the coating portion begins to the point Pe where the sliding ends. The point Pe where sliding ends can be said to be the point where flattening begins in the electrode profile. For example, it can be said to be the point where the target coating layer thickness is reached or close to within a predetermined % range.

However, in order to form an electrode active material layer on both surfaces of the current collector, there are cases by a sequential coating method in which the top surface is coated first and then the back surface is coated, and the top surface tends to have a longer sliding length compared to the back surface. Therefore, even if coating is performed using a slot die coater including the same shim, the electrode quality of the top surface is deteriorated, which is problematic. In addition, even if the electrode active material layer on the top surface is formed to have a good edge shape, a side ring phenomenon may occur in the electrode active material layer on the back surface. Therefore, simultaneous management of the top surface and the back surface is also required during slurry sequential coating.

Meanwhile, in order to manufacture a secondary battery with high energy density, the thickness of the electrode active material layer, which was about 130 µm, has been gradually increased to reach 300 µm. After forming a thick electrode active material layer using a conventional slot die coater, migration of the binder and conductive material in the slurry is intensified during drying, thereby causing the final electrode to be manufactured non-uniformly. The two-time coating, such as thinly applying the electrode active material layer followed by drying, and then applying it again on top of it followed by drying, to solve this problem has a disadvantage in that it takes a long time. In order to improve electrode performance and productivity at the same time, a double layer coating is often performed using a dual slot die coater including two shims so that the slurry may be applied in two layers, upper and lower, simultaneously.

Even in double layer coating, sliding occurs at the edge portion during the top surface coating, and since the sliding at the edge portion of the top surface acts as a substrate sagging during the back surface coating, slurry focusing occurs at the edge portion during the back surface coating, and a side ring phenomenon in which the edge portion of the back surface protrudes convexly upward may be particularly problematic. In addition, in the case of a double layer, as shown in FIG. 2, there may be a defect in which a width difference W occurs between the upper layer 18a and the lower layer 19a on the top surface of the current collector 11, and the loading degradation L caused by such a width difference W may cause a problem in which the substrate sagging phenomenon is more severe than in a single layer.

Previously, slurry coating was performed by placing a coating roll which is flat along the width direction in front of the slot die coater, and improvement of the shim and manifold shape of the slot die coater was attempted to improve sliding. However, it takes considerable effort and cost to design and replace the shim each time according to the slurry properties and pattern shape, and process management becomes very strict due to the disassembly and reassembly of die. And, it is costly, time consuming, and cumbersome to design various shims and select one of them, and there is a problem of having to repeat this process if the specifications of the electrode change. In addition, there is a disadvantage that the electrode loading conditions should be stabilized again whenever the shim shape is changed. In addition, since it is not possible to change the manifold in the slot die coater including the manifold that has been designed once, there is a limitation that replacement with a new slot die coater is absolutely required when the manifold needs to be changed.

### DISCLOSURE

### Technical Problem

The present disclosure is designed to solve the problems of the related art, and therefore the present disclosure is directed to providing a method of manufacturing an electrode for a secondary battery that improved thickness non-uniformity such as sliding or side rings.

The present disclosure is also directed to providing a method of manufacturing an electrode for a secondary battery that can minimize sliding deviation between the top surface and the back surface of the current collector when the top surface and the back surface thereof are sequentially coated with slurry.

The present disclosure is still also directed to providing a device suitable for performing this method of manufacturing an electrode for a secondary battery.

However, technical problems to be solved by the present disclosure are not limited to the above-described problems, and other problems not mentioned herein may be clearly understood by those skilled in the art from the following description of the present disclosure.

### Technical Solution

A method of manufacturing an electrode for a secondary battery according to the present disclosure for solving the above-described problem includes the step of creating an artificial step in the current collector and coating an electrode active material layer on the step. The artificial step is configured to artificially create a coating gap in a sliding part at both ends of a coated portion of the current collector in the width direction to allow the slurry to flow into the side of the step for reducing a sliding length of the electrode active material layer.

A tape may be locally attached to a coating roll on which the current collector is placed in order to create an artificial step in the current collector.

A metal or metal alloy coating layer may also be locally formed on a coating roll on which the current collector is placed in order to create an artificial step in the current collector.

The step may be formed to have a width narrower than the coating width on which the electrode active material layer is coated, and may be formed to have a thickness of 10 µm to 50 µm from a position that is 5 mm to 10 mm inward from the edge of the electrode active material layer.

The method of manufacturing an electrode for a secondary battery may further include the step of coating an additional electrode active material layer at a position aligned with the electrode active material layer on the opposite surface of the current collector coated with the electrode active material layer.

The method of manufacturing an electrode for a secondary battery may further include the step of coating an additional electrode active material layer at a position aligned with the electrode active material layer on the opposite surface of the current collector coated with the electrode active material layer by unwinding the winding roll in the opposite direction, after coating, drying, and winding the electrode active material layer with the winding roll while driving the current collector over the coating roll.

The electrode active material layer may be coated to have a thickness of 70 µm to 200 µm by applying a slurry containing 40% to 50% of solid content, and the step may be formed to have a thickness of 10 µm to 50 µm from a position that is 5 mm to 10 mm inward from the edge of the electrode active material layer, thereby improving the sliding length by 15% to 20% and the sliding thickness by 20% to 30% compared to the electrode active material layer formed under the same conditions without the step.

A method of manufacturing an electrode for a secondary battery according to the present disclosure for solving another above-described problem includes the steps of coating a top surface of the current collector by placing the current collector on a coating roll having a step aligned with a width narrower than the coating width where the electrode active material layer is coated and by discharging slurry through a slot die coater to coat the electrode active material layer on the step; and coating a back surface of the current collector by inverting the current collector with the top surface coated to place it on a coating roll with no step and by discharging slurry through a slot die coater to coat an additional electrode active material layer at a position aligned with the electrode active material layer.

The coating roll with the step formed may include a locally attached tape.

The coating roll with the step formed may also include a locally formed metal or metal alloy coating layer.

The step may be formed to have a thickness of 10 µm to 50 µm from a position that is 5 mm to 10 mm inward from the edge of the electrode active material layer.

A coating gap difference between the edge/center portion die lips of the slot die coater and the current collector may be made through the step.

Sliding in the coating profile of the electrode active material layer may be reduced by allowing the slurry to flow into the side of the step.

The sliding lengths of the electrode active material layer and the additional electrode active material layer may be 3 mm to 4 mm and similar to each other.

A device of manufacturing an electrode for a secondary battery according to the present disclosure for solving still another above-described problem includes a coating roll for top surface coating having a step aligned with a width narrower than the coating width where the electrode active material layer is coated onto a current collector; a coating roll for back surface coating of the current collector after the top surface coating with no step; wherein the step is configured to artificially create a coating gap in a sliding part at both ends of a coated portion of the current collector in the width direction; and a slot die coater.

The coating roll for top surface coating may include a locally attached tape.

The coating roll for top surface coating may include a locally formed metal or metal alloy coating layer.

The step may be formed to have a thickness of 10 µm to 50 µm from a position that is 5 mm to 10 mm inward from the edge of the electrode active material layer.

A coating gap difference between the edge/center portion die lips of the slot die coater and the current collector placed on the coating roll for top surface coating may be made through the step.

The coating roll for top surface coating may be formed with a step having a higher height in the center portion compared to both edges of the electrode active material layer.

### Advantageous Effects

According to the present disclosure, sliding may be improved by creating an artificial step in the current collector and coating the electrode active material layer on the step. It is possible to prevent non-uniform loading due to sliding, and is also possible to solve the problem of non-uniformity during rolling.

According to the present disclosure, a coating roll with a step formed may be used as a means for creating an artificial step in the current collector. The coating roll with the step formed may be easily implemented by attaching a tape, or may be implemented in a sophisticated and durable manner by forming a coating layer of metal or metal alloy. In particular, since the tape can be easily attached and removed, it has the advantage of being implemented as a variable coating roll to flexibly respond to models with changed coating widths.

According to the present disclosure, an electrode for a secondary battery may be manufactured by improving the deviation of sliding parts of the top surface and the back surface. Accordingly, the NP ratio, which is the face-to-face ratio of the negative electrode active material layer to the positive electrode active material layer, satisfies the design conditions, so that the discharge capacity of the positive electrode does not exceed the discharge capacity of the negative electrode, thereby preventing lithium precipitation and ensuring the safety of the secondary battery.

According to the present disclosure, in a sequential coating method of coating the back surface after coating the top surface, the occurrence of side rings on the back surface may be prevented. The simultaneous management of the top surface and the back surface has an excellent effect.

According to the present disclosure, the shape control effect of the boundary surface (sliding part) is excellent when coating a stripe pattern through a slot die coater not only for a single layer but also for a double layer.

According to the present disclosure, since the device only needs to be operated to the extent of separately using the coating roll for top surface coating and the coating roll for back surface coating, it is possible to significantly reduce the replacement cost, effort, and replacement time compared to the case of using improvements of a conventional shim or manifold shape.

According to the present disclosure, no shim changes or manifold improvements are required to satisfy the electrode design. The simple method of adjusting only the step formed on the coating roll has an excellent effect on improving sliding. According to the present disclosure, there is no need for slot die replacement or shim reassembly at all, thereby causing no problem of deviation occurring accordingly.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a cross-sectional view of an electrode sheet showing electrode sliding.
FIG. 2 shows a state in which a width difference between an upper layer and a lower layer occurs in a double layer.
FIG. 3 is a step-by-step schematic diagram of an electrode using a conventional sequential coating method that led to the present disclosure.
FIG. 4 is a cross-sectional schematic diagram in the X direction of a device for describing a method of manufacturing an electrode for a secondary battery according to an embodiment of the present disclosure.
FIG. 5 is a cross-sectional schematic diagram in the Y direction of a device for describing a method of manufacturing an electrode for a secondary battery according to an embodiment of the present disclosure.
FIG. 6 is a top schematic diagram of a device for describing a method of manufacturing an electrode for a secondary battery according to an embodiment of the present disclosure.
FIG. 7 is a perspective view of a coating roll that may be included in the device shown in FIGS. 4 to 6.
FIG. 8 is a view showing the profile of an electrode active material layer according to a method of manufacturing an electrode for a secondary battery according to an embodiment of the present disclosure in comparison with the prior art.
FIG. 9 is a step-by-step schematic diagram of an electrode according to a method of manufacturing an electrode for a secondary battery according to another embodiment of the present disclosure.
FIG. 10 is a schematic diagram of a device of manufacturing an electrode for a secondary battery according to an embodiment of the present disclosure.
FIG. 11 is a view showing the position where the tape is attached to a coating roll.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The inventors of the present disclosure analyzed the cause of the tendency of the top surface to have a long sliding length and the back surface to have a short sliding length during sequential coating. As a result, it was found that this occurs depending on whether the electrode active material layer is coated on the current collector when coating the top surface and the back surface. When the top surface is coated, the sliding length is long due to the limitation of the interfacial properties of the fluid because the current collector is coated, but the back surface is coated with a stripe coating of the same width on the opposite surface of the coated top surface, and the sliding is shortened as the electrode active material slurry flows into the part where the sliding occurs on the top surface. Therefore, it was found that thickness non-uniformity such as sliding in the electrode coating profile could be resolved if the coating on the top surface was initially made under the same conditions as the coating on the back surface, which led to proposing the present disclosure.

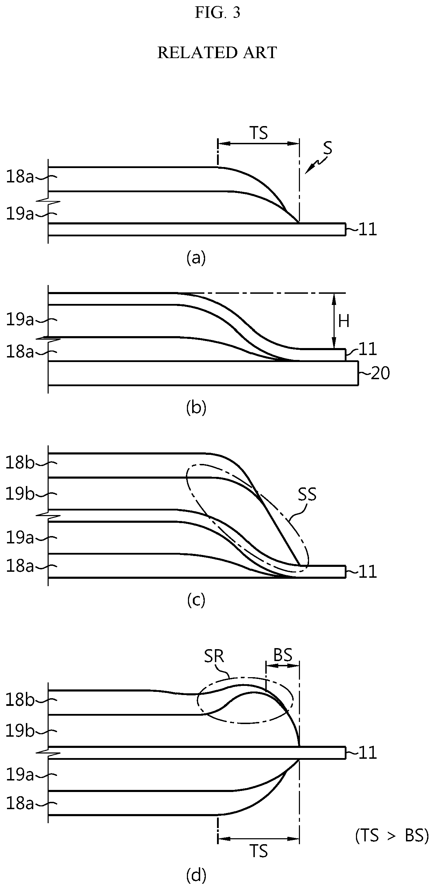

FIG. 3 is a step-by-step schematic diagram of an electrode using a conventional sequential coating method that led to the present disclosure as described above. The background of the present disclosure will be described in detail with reference to FIG. 3.

FIG. 3 (a) shows a state in which the top surface of the current collector 11 is coated with a double layer of an upper layer 18a and a lower layer 19a. When the top surface is coated, a sliding S phenomenon occurs, resulting in the edge portion loading sagging. In this case, the top surface sliding length is TS. As a result of the experiment, TS was about 4 mm to 6 mm under normal negative electrode active material slurry conditions.

FIG. 3 (b) shows a state in which the back surface is facing up by inverting the current collector 11 and the inverted current collector 11 is placed on the coating roll 20. The current collector 11 in a part where the coating layer is not formed touches the coating roll 20, and thus a substrate sagging H phenomenon occurs. In this way, the sliding S generated at the edge portion during the top surface coating acts as a substrate sagging H during the back surface coating. This is a problem that inevitably occurs during conventional sequential coating.

In this state, when the upper layer 18b and the lower layer 19b are coated in a double layer on the back surface of the current collector 11 as shown in FIG. 3 (c), the slurry focusing SS at the edge portion of the back surface increases loading on the corresponding edge portion. The thickness of both surfaces of the coated electrode is good, but if the current collector 11 is placed flat as shown in FIG. 3 (d) after completing the back surface coating, a side ring SR phenomenon in which the edge portion of the back surface protrudes convexly upward due to the slurry focusing SS generated during the back surface coating occurs. And, sliding also occurs on the back surface and its length is BS. As a result of the experiment, the sliding length BS was about 2 mm to 4 mm under normal negative electrode active material slurry conditions. In this way, the top surface sliding length TS is greater than the back surface sliding length BS (TS > BS).

As such, in the sequential coating method, the sliding length TS of the top surface and the sliding length BS of the back surface are different, and this phenomenon occurred equally in coaters with a single-stage or two-stage drying furnace. In a single-stage coater, after drying the top surface, the current collector is inverted and coated on the back surface. In a two-stage coater, the top surface is dried and then the back surface is coated.

The inventors of the present disclosure noted the difference in the coating gap between the top surface and the back surface in a sequential coating method in which the top surface is coated first and then the back surface is coated. When the top surface is coated as shown in FIG. 3 (a), the sliding length TS is inevitably long due to the limitation of the interfacial properties of the fluid because the current collector 11 is coated. On the other hand, when the back surface is coated as shown in FIG. 3 (c), the sliding length BS of the back surface is judged to be shortened because the slurry flows into the part where the sliding S has already occurred on the top surface. Since there is a difference in the coating gap unless the top surface and the back surface are coated at the same time, the inventors of the present disclosure conceived that the sliding length could be made similar by making the conditions when the top surface and the back surface are coated as similar as possible. In other words, when the top surface is coated, the back surface is not coated, but when the back surface is coated, the top surface is coated, thereby inevitably causing the coating gap difference. Therefore, when initially coating the top surface, the coating gap difference may be eliminated or reduced by creating the same or similar conditions as those for coating the back surface after coating the top surface. Accordingly, the inventors of the present disclosure propose creating an artificial step in the current collector when coating the top surface and forming the electrode active material layer on the step.

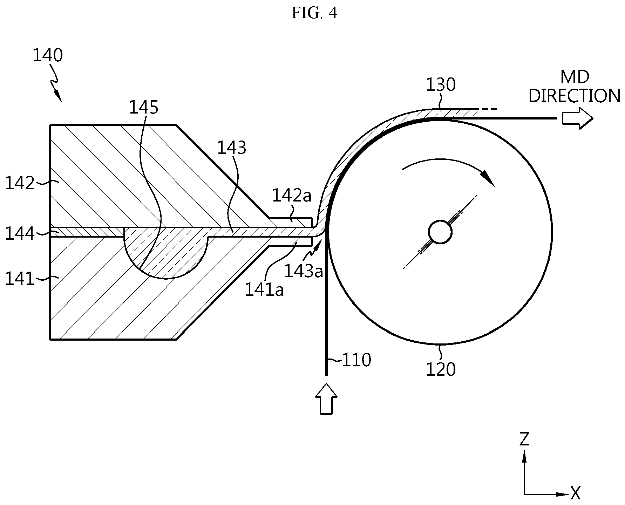

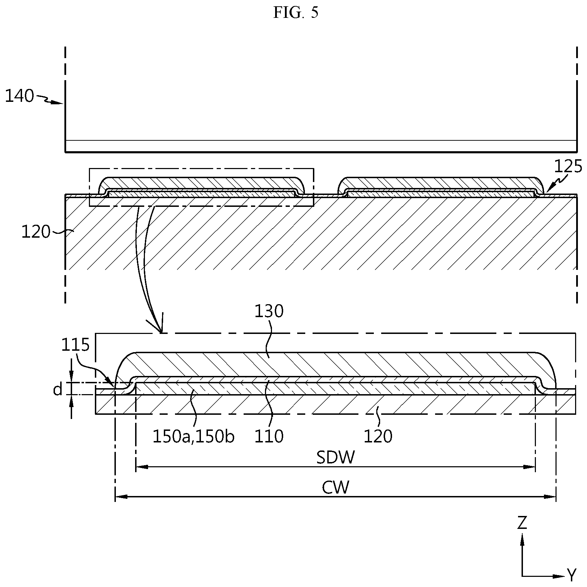

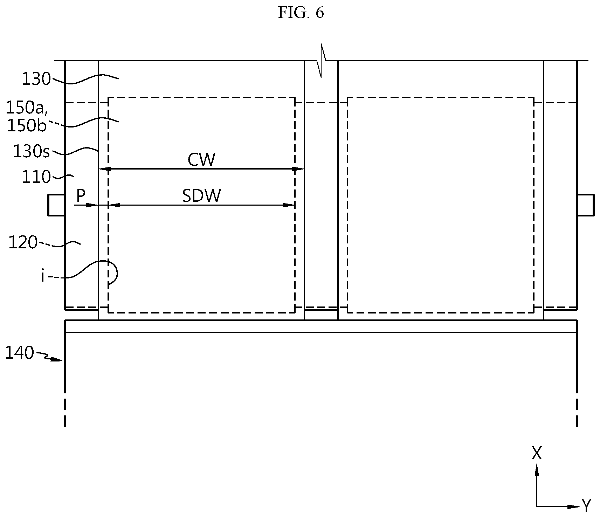

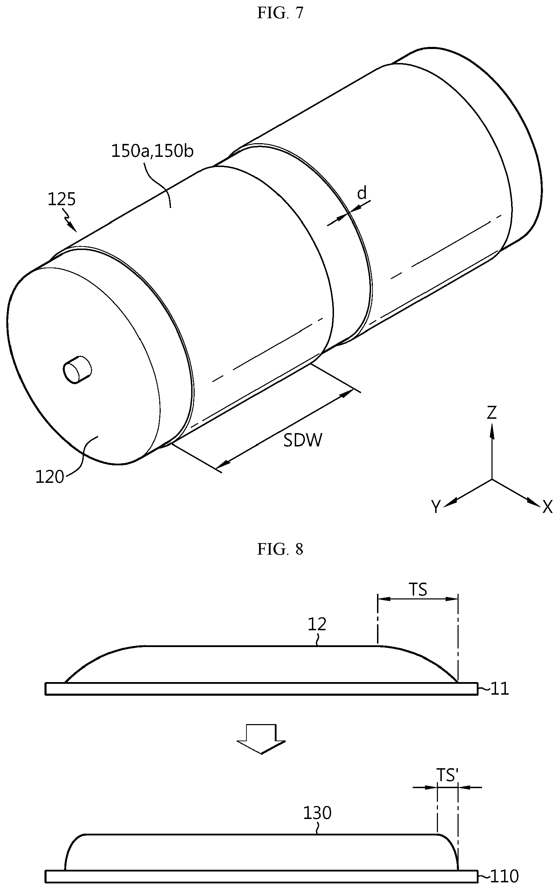

FIG. 4 is a cross-sectional schematic diagram in the X direction of a device for describing a method of manufacturing an electrode for a secondary battery according to an embodiment of the present disclosure. FIG. 5 is a cross-sectional schematic diagram in the Y direction of a device for describing a method of manufacturing an electrode for a secondary battery according to an embodiment of the present disclosure. FIG. 6 is a top schematic diagram of a device for describing a method of manufacturing an electrode for a secondary battery according to an embodiment of the present disclosure. FIG. 7 is a perspective view of a coating roll that may be included in the device shown in FIGS. 4 to 6. FIG. 8 is a view showing the profile of an electrode active material layer according to a method of manufacturing an electrode for a secondary battery according to an embodiment of the present disclosure in comparison with the prior art.

A method of manufacturing an electrode for a secondary battery according to an embodiment of the present disclosure includes the steps of creating an artificial step 115 in the current collector 110 and coating the electrode active material layer 130 on the step 115. To perform this method, a device including a coating roll 120 and a slot die coater 140 as shown in FIGS. 4 to 6 may be used.

The slot die coater 140 may be a single slot or dual slot. The example shown is a single slot. The slot die coater 140 includes a lower die 141, an upper die 142, and a shim 144 provided therebetween to form a slot 143. In this embodiment, the slot die coater 140 includes two die blocks, which are a lower die 141 and an upper die 142, but there may be two or more die blocks. The end of the slot 143 becomes an outlet 143a. In FIG. 4, the slot die coater 140 is installed so that the slurry discharge direction (X direction) is nearly horizontal (almost: ±5 degrees). However, it is not limited to the form shown here as an example, and for example, it may also be configured as a vertical die with the slurry discharge direction upward (Z direction).

The slot 143 is formed between where the upper die 142 and the lower die 141 face each other. The shim 144 is interposed therein to provide a gap between them, thereby forming the slot 143 corresponding to a passage through which the slurry may flow. The thickness of the shim 144 determines the vertical width (Z direction, slot gap) of the slot 143.

Any one of the upper die 142 and the lower die 141 may be provided with a manifold 145 that has a predetermined depth and communicates with the slot 143. This embodiment illustrates an example where the manifold 145 is provided in the lower die 141. Although not shown in the drawings, this manifold 145 is connected to an externally installed slurry supply chamber (not shown) through a supply pipe to receive slurry. When the manifold 145 is full of slurry, the slurry is guided to flow along the slot 143 and is discharged to the outside through the outlet 143a.

The shim 144 has a plurality of openings by intermittently cutting one area, and may be interposed in the remaining parts except for one side of the edge areas on the opposing surface of each of the upper die 142 and the lower die 141. Accordingly, the outlet 143a through which the slurry may be discharged to the outside is formed between the die lips 141a, 142a, which are the respective front ends of the lower die 141 and the upper die 142. The outlet 143a can also be said to be formed by separating the die lips 141a, 142a. FIGS. 5 and 6 show an example where the shim 144 has two openings and two patterns may be coated side by side for each lane.

According to the slot die coater 140 having this configuration, a coating roll 120 provided to be rotatable as shown in FIGS. 4 to 6 is disposed in front of the slot die coater 140, and while driving the current collector 110 in the MD direction by rotating the coating roll 120, the slurry may be discharged and continuously in contact with the surface of the current collector 110 to be applied to the current collector 110. Alternatively, a pattern coating may also be formed intermittently on the current collector 110 by alternately supplying and stopping the slurry.

In this way, the slurry discharged from the slot die coater 140 may be applied on the current collector 110 transferred by the coating roll 120. The slurry discharged from the slot die coater 140 is applied to one surface of the current collector 110 to form the electrode active material layer 130. The coating width CW of the electrode active material layer 130 coated on the current collector 110 is determined by the width of the slot 143. When the coating width CW needs to be changed, various coating widths CW may be implemented by changing the shim 144. Here, since a step 125 is formed on the coating roll 120, a step 115 is formed on the current collector 110, and the electrode active material layer 130 by slurry application may be formed on the step 115.

FIG. 7 is a perspective view of a coating roll 120 that may be included in the device shown in FIGS. 4 to 6. In order to create an artificial step 115 in the current collector 110, a tape 150a may be locally attached to the coating roll 120 on which the current collector 110 is placed.

Instead of attaching the tape 150a to the coating roll 120, a metal or metal alloy coating layer 150b may also be formed. For example, the coating layer 150b of an alloy such as WC may be formed. Such a tape 150a or coating layer 150b protrudes from the surface of the coating roll 120 to a predetermined height to form a step 125. The current collector 110 may be typically a conductive metal foil, such as aluminum or copper, and is appropriately selected depending on the polarity of the electrode. In general, the current collector for a positive electrode has a thickness of 10 µm to 20 µm, and the current collector for a negative electrode has a thickness of 5 µm to 15 µm. Therefore, the step 125 of the coating roll 120 may be transferred intact to the thin current collector 110 to form the step 115 on the current collector 110.

The steps 115, 125 are formed with a width SDW narrower than the coating width CW on which the electrode active material layer 130 is coated (CW > SDW), and may be formed with a thickness d of 10 µm to 50 µm from a position i that is 5 mm to 10 mm inward from the edge (edge portion, 130s) of the electrode active material layer 130. For example, when a 50 µm thick tape 150a having a width SDW of 90 mm is attached to the coating roll 120 in a process with a coating width CW of 100 mm, a step 125 with a thickness d of 45 µm may be formed from a position i that is 5 mm inward from the edge 130s of the electrode active material layer 130, which may be the step 115 of the current collector 110. Although it may vary depending on the physical properties of the slurry, coating gap, or coating width CW, it was confirmed that a satisfactory sliding improvement effect may be obtained under commonly used slurry conditions when the steps 115, 125 with a thickness d of 10 µm to 50 µm are formed at a position i that is 5 mm to 10 mm inward from the edge 130s of the electrode active material layer 130. If the gap p between the edge 130s of the electrode active material layer 130 and the edge of the step 125 is smaller than 5 mm, or if the step thickness d is smaller than 10 µm, the extent to which the slurry flows into the step 115 is insignificant, and thus the effect of improving the sliding length may be insignificant. If the gap p between the edge 130s of the electrode active material layer 130 and the edge of the step 125 is greater than 10 mm, or if the step thickness d is greater than 50 µm, the shape of the edge portion of the electrode active material layer 130 may not be preferable.

The coating roll 120 in which the step 125 is formed as described above may be easily implemented by attaching a tape 150a, or may be implemented in a sophisticated and durable manner by forming a coating layer 150b of metal or metal alloy. In particular, since the tape 150a can be easily attached and removed, it has the advantage of being implemented as a variable coating roll to flexibly respond to models with changed coating width CW.

A method of manufacturing an electrode for a secondary battery according to an embodiment of the present disclosure will be described in more detail with reference to FIGS. 4 to 7. For example, a step 125 is formed on the coating roll 120 by attaching a tape 150a with a width SDW narrower than the actual coating width CW to the coating roll 120, and then the step 125 is transferred to the current collector 110 to form a step 115. The slurry coating is performed on the step 115. For example, a 45 µm thick tape 150a is attached at a position that is 5 mm inward from the edge 130s of the electrode active material layer 130, and the slurry is discharged onto the current collector 110 through a slot die coater 140 to coat the electrode active material layer 130 on the step 115 of the current collector 110 while placing the current collector 110 on the coating roll 120 and driving.

Through this, an electrode profile as shown in FIG. 8 is obtained, and as the electrode active material slurry flows into the artificially created step 115, the sliding length TS' of the electrode active material layer 130 becomes shorter than the conventional sliding length TS (TS' < TS).

For example, if this level of steps 115, 125 are formed in an electrode having a coating layer thickness of 70 µm to 200 µm (excluding the current collector) with a solid content of about 40% to 50% of the negative electrode active material slurry, there is an improvement effect of the length being reduced by 15% to 20% compared to the existing sliding level.

In terms of sliding shape control, the sliding judgment criterion or management factor may be the sliding thickness in addition to the sliding length, the definition of which may be changed. For example, previously, the sliding thickness at 50% position of the sliding length was managed to be a thickness of 65% or more of the target coating layer thickness, which may be changed as needed, and for example, the sliding thickness at 40% position of the sliding length may be managed to be a thickness of 69.5% or more of the target coating layer thickness. For example, if this level of steps 115, 125 are formed in an electrode having a coating layer thickness of 70 µm to 200 µm (excluding the current collector) with a solid content of about 40% to 50% of the negative electrode active material slurry, there is an improvement effect of the thickness being increased by 20% to 30% compared to the existing sliding level.

In other words, according to the present disclosure, the sliding length TS' may be reduced by 15% to 20%, and the sliding thickness at 40% position of the sliding length may be increased by 20% to 30% compared to the electrode active material layer under the same conditions formed with no step.

In this way, by creating an artificial step 115 in the current collector 110 and coating the electrode active material layer 130 on the step 115, an electrode active material layer 130 having a reduced sliding length TS' compared to a conventional one may be formed, thereby improving sliding. It is possible to prevent non-uniform loading due to sliding, and is also possible to solve the problem of non-uniformity during rolling.

Meanwhile, the method of manufacturing an electrode for a secondary battery according to another embodiment of the present disclosure may further include the step of coating an additional electrode active material layer at a position aligned with the electrode active material layer 130 on the opposite surface of the current collector 110 coated with the electrode active material layer 130. For example, it may further include the step of coating an additional electrode active material layer at a position aligned with the electrode active material layer 130 on the opposite surface of the current collector 110 coated with the electrode active material layer 130 by unwinding a winding roll (not shown) in the opposite direction, after coating, drying, and winding the electrode active material layer 130 with the winding roll (not shown) while driving the current collector 110 over the coating roll 120.

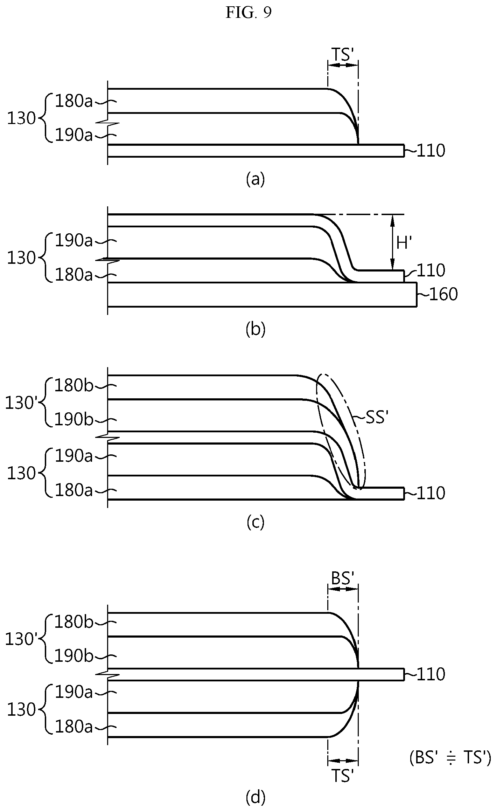

FIG. 9 is a step-by-step schematic diagram of an electrode according to a method of manufacturing an electrode for a secondary battery according to another embodiment of the present disclosure, which may be described as follows in comparison with the conventional step-by-step schematic diagram of an electrode in FIG. 3.

FIG. 9 (a) shows a state in which the top surface of the current collector 110 is coated with a double layer of an upper layer 180a and a lower layer 190a. For example, this is the case where the slot die coater 140 of FIG. 4 is a dual slot die coater. When the top surface is coated, the slurry is discharged through the slot die coater 140 to be coated on the current collector 110 with the step 115 artificially formed as described above, and thus the top surface sliding length TS' is shorter than the conventional top surface sliding length (TS in FIG. 3) (TS' < TS). Sliding may be reduced by allowing the slurry to flow into the side of the step 125.

In this way, the top surface is coated using the coating roll 120 in which a step 125 tailored to the coating width CW of a specific model is formed. As a result, sliding is improved by artificially creating a coating gap in the sliding part. As such, according to the present disclosure, the shape control effect of the boundary surface (sliding part) is excellent when coating a stripe pattern through the slot die coater 140 for not only a single layer but also a double layer.

In FIG. 9 (b), the current collector 110 is inverted so that the back surface is facing up. In this case, another coating roll 160 without a step is used instead of the coating roll 120 forming the step 125 as shown in FIG. 4, and FIG. 9 (b) shows a state in which the current collector 110 is placed on the coating roll 160. The current collector 110 in a part where the coating layer is not formed touches the coating roll 160, and thus a substrate sagging H' phenomenon occurs. However, since the sliding is reduced compared to a conventional one, the size of the substrate sagging H' is smaller than that of the conventional substrate sagging (H in FIG. 3) (H' < H).

In this state, as shown in FIG. 9 (c), the upper layer 180b and the lower layer 190b are coated in a double layer on the back surface of the current collector 110 to form an additional electrode active material layer 130'. The current collector 110 with the top surface coated is inverted and placed on the coating roll 160 with no step, and the slurry is discharged through the same slot die coater 140 to coat an additional electrode active material layer 130' at a position aligned with the electrode active material layer 130. When the back surface of the current collector 110 is coated, slurry focusing SS' at the edge of the back surface occurs, but it is not as severe as in the prior art because the top surface sliding length TS' is shortened.

If the current collector 110 is placed flat as shown in FIG. 9 (d) after completing the back surface coating, the side ring phenomenon does not occur even if the slurry focusing SS' occurs during the back surface coating. And, the sliding length BS' on the back surface becomes almost similar to the sliding length TS' on the top surface (BS' ≒ TS').

In this way, when the top surface is initially coated, the electrode active material layer 130 having a reduced sliding length TS' may be formed by coating the current collector 110 having the step 115 artificially formed so as to create the same or similar conditions as coating on the back surface after the top surface coating. And, since the sliding of the top surface is improved, the amount of slurry flowing into the opposite back surface during coating decreases, and the back surface sliding length BS' becomes longer than before, which results in reduction of the sliding deviation (TS' - BS') between the top surface and the back surface, thereby ensuring uniform sliding quality.

Under commonly used slurry conditions, it was confirmed that the sliding lengths TS', BS' of the electrode active material layer 130 and the additional electrode active material layer 130' were 3 mm to 4 mm and also similar to each other.

As such, in the present disclosure, it is possible to achieve uniformity of the sliding shape of the top surface and the back surface by providing an artificial step on the top surface. An electrode for a secondary battery may be manufactured by improving the deviation of the sliding parts of the top surface and the back surface. Accordingly, the stability of the secondary battery may be secured by ensuring that the NP ratio satisfies the design conditions. By ensuring that the NP ratio satisfies the design conditions, the discharge capacity of the positive electrode does not exceed the discharge capacity of the negative electrode, thereby enabling to prevent lithium precipitation. According to the present disclosure, in the sequential coating method where the back surface is coated after the top surface coating, the occurrence of side rings on the back surface may be prevented. The simultaneous management of the top surface and the back surface has an excellent effect.

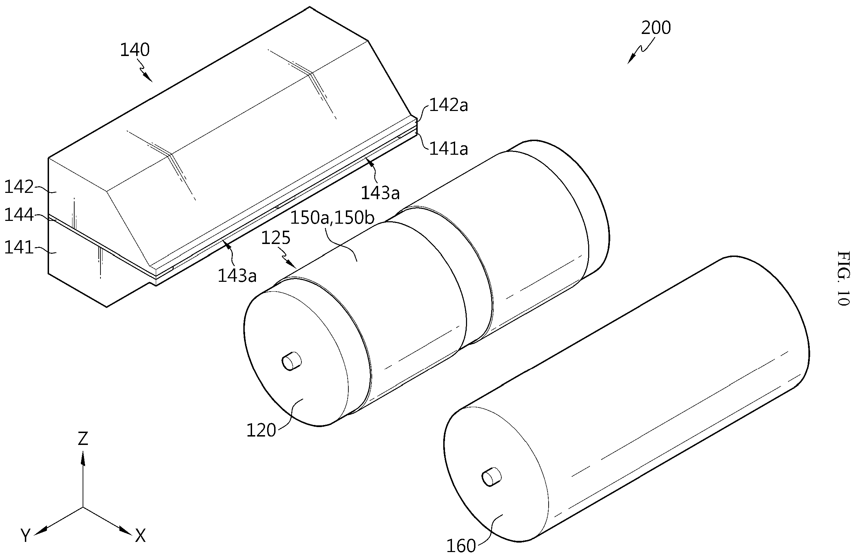

FIG. 10 is a schematic diagram of a device of manufacturing an electrode for a secondary battery according to an embodiment of the present disclosure.

As described with reference to FIG. 5 and the like, as a means for creating an artificial step 115 in the current collector 110, the coating roll 120 having the step 125 formed may be used as a coating roll for top surface coating as previously presented. Therefore, a device 200 of manufacturing an electrode for a secondary battery according to an embodiment of the present disclosure may include a coating roll 120 on which the step 125 is formed, a coating roll 160 with no step for back surface coating, and a slot die coater 140, as shown in FIG. 10.

A coating gap difference between the edge/center portion die lips 141a, 142a of the slot die coater 140 and the current collector 110 placed on the coating roll 120 may be made through the step 125. The coating roll 120 is formed with a step 125 having a higher height in the center portion compared to both edges of the electrode active material layer. By allowing the slurry to flow into the side of the step 125, sliding in the coating profile of the electrode active material layer may be reduced.

According to the present disclosure, since the device only needs to be operated to the extent of separately using the coating roll 120 for top surface coating and the coating roll 160 for back surface coating, it is possible to significantly reduce the replacement cost, effort, and replacement time compared to the case of using improvements of a conventional shim or manifold shape. In addition, since the tape 150a can be easily attached and removed in the case of implementing the step 125 by attaching the tape 150a, the top surface may be coated using the coating roll 120 with the tape 150a attached, and then the back surface may also be coated using the coating roll 160 with the tape 150a removed, thereby having an advantage in that a conventional slot die coater and coating roll may be utilized intactly just by adding the cost of the tape 150a.

According to the present disclosure, no shim changes or manifold improvements are required to satisfy the electrode design. The simple method of adjusting only the step 125 formed on the coating roll 120 has an excellent effect on improving sliding. According to the present disclosure, there is no need for slot die replacement or shim reassembly at all, thereby causing no problem of deviation occurring accordingly.

An electrode active material layer may be stably formed using the method and device described hereinabove. According to the present disclosure, since it is possible to control coating width, loading amount, and sliding, the quality of the formed electrode active material layer is very excellent. For example, the thickness of the coating layer along the width direction of the current collector may be uniform regardless of the position, and the profile of the sliding area may be formed into a desired shape. Accordingly, according to the present disclosure, an electrode active material layer may be stably formed without causing pattern defects.

For example, it can be applied to manufacturing a positive electrode for a secondary battery by coating a positive electrode active material slurry.

The positive electrode includes a current collector and a positive electrode active material layer formed on the surface of the current collector. The current collector is one that exhibits electrical conductivity, such as Al or Cu, and an appropriate current collector may be used according to the polarity of the electrode known in the secondary battery field. The positive electrode active material layer may further include one or more of a plurality of positive electrode active material particles, a conductive material, and a binder. In addition, the positive electrode may further include various additives for the purpose of complementing or improving electrochemical properties.

The active material is not limited to a specific component as long as it can be used as a positive electrode active material for a lithium-ion secondary battery. Non-limiting examples thereof may include any one selected from: layered compounds such as lithium manganese composite oxide (LiMn₂O₄, LiMnO₂), lithium cobalt oxide (LiCoO₂), lithium nickel oxide (LiNiO₂), or compounds substituted with one or more transition metals; lithium manganese oxide represented by the chemical formula Li₁₊ₓMn₂₋ₓO₄ (where x is 0 to 0.33), such as LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site type lithium nickel oxide represented by the chemical formula LiNi₁₋ₓMₓO₂ (where M is Co, Mn, Al, Cu, Fe, Mg, B or Ga, and x is 0.01 to 0.3); lithium manganese complex oxide represented by the chemical formula LiMn₂₋ₓMₓO₂ (where M is Co, Ni, Fe, Cr, Zn or Ta, and x is 0.01 to 0.1) or Li₂Mn₃MO₈ (where M is Fe, Co, Ni, Cu or Zn); LiMn₂O₄ in which a part of Li in the chemical formula is substituted with an alkaline earth metal ion; disulfide compounds; Fe₂(MoO₄)₃; or a mixture of two or more of them. In the present disclosure, the positive electrode may include one or more of a polymer-based solid electrolyte, an oxide-based solid electrolyte, and a sulfide-based solid electrolyte as a solid electrolyte material.

The conductive material may typically be added in an amount of 1 wt% to 20 wt% based on the total weight of the mixture including the active material. This conductive material is not particularly limited as long as it has conductivity without causing chemical changes in the corresponding battery, and particular examples thereof may include any one selected from conductive materials such as: graphite such as natural graphite or artificial graphite; carbon black such as acetylene black, ketjen black, channel black, furnace black, lamp black, and summer black; conductive fibers such as carbon fiber or metal fiber; carbon fluoride; metal powders such as aluminum, and nickel powder; conductive whiskers such as zinc oxide and potassium titanate; conductive metal oxides such as titanium oxide; polyphenylene derivatives; or a mixture of two or more of them.

The binder is not particularly limited as long as it is a component that aids in the binding of the active material and the conductive material and the binding to the current collector, and particular examples thereof may include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylenepropylene-diene monomer (EPDM), sulfonated EPDM, styrene butadiene rubber, fluorine rubber, and various copolymers. The binder may typically be included in the range of 1 wt% to 30 wt%, or 1 wt% to 10 wt%, based on 100 wt% of the electrode layer.

In another example, it can be applied to manufacturing a negative electrode for a secondary battery by coating a negative electrode active material slurry. The negative electrode includes a current collector and a negative electrode active material layer formed on the surface of the current collector. The negative electrode active material layer may further include one or more of a plurality of negative electrode active material particles, a conductive material, and a binder. In addition, the negative electrode may further include various additives for the purpose of complementing or improving electrochemical properties.

The negative electrode active material may be a carbon material such as graphite, amorphous carbon, diamond-like carbon, fullerene, carbon nanotubes, and carbon nanohorns, lithium metal materials, alloy materials such as silicon or tin, oxide materials such as Nb₂O₅, Li₅Ti₄O₁₂, TiO₂, or a combination thereof. For the negative electrode, the conductive material, binder, and current collector may be referred to the contents described for the positive electrode.

The slurry including such a positive electrode active material or a negative electrode active material has a very high viscosity. For example, the viscosity may be 1000 cps or more. The viscosity of the active material slurry for use in forming the secondary battery electrode may also be 2000 cps to 30000 cps. For example, the negative electrode active material slurry may have a viscosity of 2000 cps to 4000 cps. The positive electrode active material slurry may have a viscosity of 8000 cps to 30000 cps. And, this slurry may include an active material having an average particle diameter of, for example, about 10 µm.

Hereinafter, it is intended to aid understanding of the present disclosure by further describing experimental examples related to the present disclosure.

As a result of the experiment under the given conditions, the electrode active material layer by the conventional coating method was formed to have the electrode profile as shown in FIG. 1, and the sliding length TS was about 4.5 mm. In addition, the inventors of the present disclosure experimentally confirmed that the conventional sliding mainly exists in a part that is 5 mm to 10 mm inward from the electrode edge portion. Accordingly, in order to reduce the coating gap difference in the corresponding part, a test was conducted by masking a tape having a thickness of 45 µm, which is 10 mm smaller than the electrode coating width, on a conventional flat coating roll.

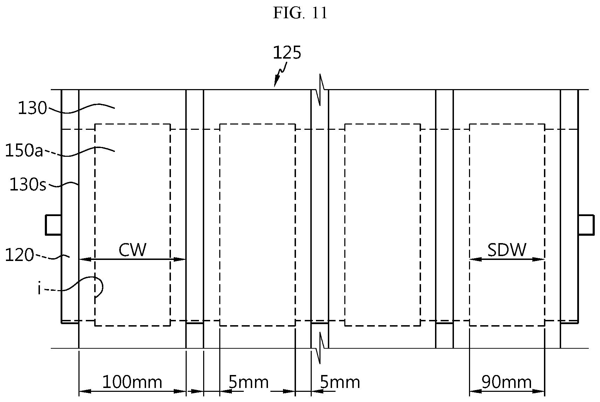

FIG. 11 is a view showing the position where the tape is attached to a coating roll.

For example, a case where a 50 µm thick tape 150a having a width SDW of 90 mm is attached to the coating roll 120 in a process with a coating width CW of 100 mm is shown. A step 125 with a thickness of 45 µm may be formed from a position i that is 5 mm inward from the edge 130s of the electrode active material layer 130. In this way, a step test was performed by attaching a tape 150a that is 10 mm smaller than the electrode coating width CW so that the tape 150a may be located 5 mm inward from the edge of the electrode coating width CW.

Before attaching the tape, the coating roll (a flat conventional coating roll without a step) had no steps, and thus the surface of the copper foil, which is the current collector placed thereon, was also flat.

In the experimental example, laser marking was performed to mark the location to which the tape was to be attached on the coating roll. A line corresponding to the electrode coating width was marked on the coating roll. The tape was attached to the coating roll. The tape was attached inward than the marked line. This resulted in implementing a coating roll where a step is formed.

When a copper foil was placed on the coating roll with a step formed in this way, the step was transferred to the copper foil intactly. According to the experimental example, an electrode active material layer was coated on the step of the copper foil with a step formed under normal negative electrode active material slurry conditions.

As measured for the electrode after drying, as a result of forming a step by taping as in the experimental example, the top surface sliding length was 3.6 mm, which was improved by 20% reduction compared to the conventional sliding length of 4.5 mm.

The back surface was coated using a coating roll with no step. When the back surface was coated, the sliding length was similar to that of the top surface.

Conventionally, when the top surface is coated, the back surface is not coated, but when the back surface is coated, the top surface is coated, thereby inevitably causing the coating gap difference. However, in the present disclosure, when initially coating the top surface, the coating gap difference is eliminated or reduced by creating the same or similar conditions as those for coating the back surface after coating the top surface. Through this, sliding may be improved.

**[Explanation of Reference Signs]**

| | | | |
|---|---|---|---|
| 110: | current collector | 115, 125: | step |
| 120, 160: | coating roll | 130, 130': | electrode active material layer |
| 140: | slot die coater | 141: | lower die |
| 142: | upper die | 141a, 142a: | die lip |
| 143: | slot | 144: | shim |
| 145: | manifold | 150a: | tape |
| 150b: | coating layer | | |
| 200: | device of manufacturing electrode for secondary battery | | |

## Claims

1. A method of manufacturing an electrode for a secondary battery, comprising the step of creating an artificial step (115) in the current collector (110) and coating an electrode active material layer (130, 130') on the artificial step (115), **characterized in that** the artificial step (115) is configured to artificially create a coating gap in a sliding part at both ends of a coated portion of the current collector (110) in the width direction to allow the slurry to flow into the side of the step (115) for reducing a sliding length of the electrode active material layer (130).

2. The method of manufacturing an electrode for a secondary battery according to claim 1, wherein a tape (150a) is locally attached to a coating roll (120) on which the current collector (110) is placed in order to create an artificial step (115) in the current collector (110).

3. The method of manufacturing an electrode for a secondary battery according to claim 1, wherein a metal or metal alloy coating layer is locally formed on a coating roll (120) on which the current collector (110) is placed in order to create an artificial step (115) in the current collector (110).

4. The method of manufacturing an electrode for a secondary battery according to claim 1, further comprising the step of coating an additional electrode active material layer (130, 130') at a position aligned with the electrode active material layer (130, 130') on the opposite surface of the current collector (110) coated with the electrode active material layer (130, 130').

5. The method of manufacturing an electrode for a secondary battery according to claim 2 or 3, further comprising the step of coating an additional electrode active material layer (130, 130') at a position aligned with the electrode active material layer (130, 130') on the opposite surface of the current collector (110) coated with the electrode active material layer (130, 130') by unwinding the winding roll in the opposite direction, after coating, drying, and winding the electrode active material layer (130, 130') with the winding roll while driving the current collector (110) over the coating roll (120, 160).

6. A method of manufacturing an electrode for a secondary battery, comprising the steps of:
coating a top surface of the current collector (110) by placing the current collector (110) on a coating roll (120) having a step (125) aligned with a width narrower than the coating width where the electrode active material layer (130, 130') is coated and by discharging slurry through a slot die coater (140) to coat the electrode active material layer (130, 130') on the step (125); and
coating a back surface of the current collector (110) by inverting the current collector (110) with the top surface coated to place it on a coating roll (160) with no step (125) and by discharging slurry through a slot die coater (140) to coat an additional electrode active material layer (130, 130') at a position aligned with the electrode active material layer (130, 130').

7. The method of manufacturing an electrode for a secondary battery according to claim 6, wherein the coating roll (120) with the step (125) formed comprises a locally attached tape (150a).

8. The method of manufacturing an electrode for a secondary battery according to claim 6, wherein the coating roll (120) with the step (125) formed comprises a locally formed metal or metal alloy coating layer.

9. The method of manufacturing an electrode for a secondary battery according to claim 6, wherein a coating gap difference between the edge/center portion die lips of the slot die coater (140) and the current collector (110) is made through the step (125).

10. The method of manufacturing an electrode for a secondary battery according to claim 9, wherein sliding in the coating profile of the electrode active material layer (130, 130') is reduced by allowing the slurry to flow into the side of the step (125).

11. A device (200) of manufacturing an electrode for a secondary battery, comprising:
a coating roll (120) for top surface coating having a step (125) aligned with a width narrower than the coating width where the electrode active material layer (130, 130') is coated onto a current collector (110);
a coating roll (160) for back surface coating of the current collector (110) after the top surface coating with no step (125);
wherein the step (125) is configured to artificially create a coating gap in a sliding part at both ends of a coated portion of the current collector (110) in the width direction; and
a slot die coater (140).

12. The device (200) of manufacturing an electrode for a secondary battery according to claim 11, wherein the coating roll (120) for top surface coating comprises a locally attached tape (150a).

13. The device (200) of manufacturing an electrode for a secondary battery according to claim 11, wherein the coating roll (120) for top surface coating comprises a locally formed metal or metal alloy coating layer.

14. The device (200) of manufacturing an electrode for a secondary battery according to claim 11, wherein a coating gap difference between the edge/center portion die lips of the slot die coater (140) and the current collector (110) placed on the coating roll (120, 160) for top surface coating is made through the step (125).

15. The device (200) of manufacturing an electrode for a secondary battery according to claim 11, wherein the coating roll (120) for top surface coating is formed with a step (125) having a higher height in the center portion compared to both edges of the electrode active material layer (130, 130').

## Patentansprüche

1. Verfahren zum Herstellen einer Elektrode für eine Sekundärbatterie, umfassend den Schritt des Erzeugens einer künstlichen Stufe (115) in dem Stromkollektors (110) und des Abscheidens einer Elektrodenaktivmaterialschicht (130, 130') auf der künstlichen Stufe (115), **dadurch gekennzeichnet, dass** die künstliche Stufe (115) eingerichtet ist, um künstlich einen Beschichtungsspalt in einem Gleitabschnitt an beiden Enden eines beschichteten Abschnitts des Stromkollektors (110) in der Breitenrichtung zu erzeugen, um zu ermöglichen, dass das Slurry in die Seite der Stufe (115) fließt, um eine Gleitlänge der Elektrodenaktivmaterialschicht (130) zu verringern.

2. Verfahren zum Herstellen einer Elektrode für eine Sekundärbatterie nach Anspruch 1, wobei ein Band (150a) lokal an einer Beschichtungswalze (120) angebracht ist, auf welcher der Stromkollektor (110) platziert wird, um eine künstliche Stufe (115) in dem Stromkollektor (110) zu erzeugen.

3. Verfahren zum Herstellen einer Elektrode für eine Sekundärbatterie nach Anspruch 1, wobei eine Metall- oder Metalllegierungsbeschichtungsschicht lokal auf einer Beschichtungswalze (120) gebildet wird, auf welcher der Stromkollektor (110) platziert wird, um eine künstliche Stufe (115) in dem Stromkollektor (110) zu erzeugen.

4. Verfahren zum Herstellen einer Elektrode für eine Sekundärbatterie nach Anspruch 1, ferner umfassend den Schritt des Abscheidens einer zusätzlichen Elektrodenaktivmaterialschicht (130, 130') an einer Position, die mit der Elektrodenaktivmaterialschicht (130, 130') auf der gegenüberliegenden Oberfläche des Stromkollektors (110) ausgerichtet ist, der mit der Elektrodenaktivmaterialschicht (130, 130') beschichtet wird.

5. Verfahren zum Herstellen einer Elektrode für eine Sekundärbatterie nach Anspruch 2 oder 3, ferner umfassend den Schritt des Abscheidens einer zusätzlichen Elektrodenaktivmaterialschicht (130, 130') an einer Position, die mit der Elektrodenaktivmaterialschicht (130, 130') auf der gegenüberliegenden Oberfläche des Stromkollektors (110) ausgerichtet ist, der mit der Elektrodenaktivmaterialschicht (130, 130') beschichtet wird, durch Abwickeln der Wickelwalze in der entgegengesetzten Richtung nach dem Beschichten, Trocknen und Wickeln der Elektrodenaktivmaterialschicht (130, 130') mit der Wickelwalze, während der Stromkollektor (110) über die Beschichtungswalze (120, 160) geführt wird.

6. Verfahren zum Herstellen einer Elektrode für eine Sekundärbatterie, umfassend die Schritte:
Beschichten einer oberen Oberfläche des Stromkollektors (110) durch Platzieren des Stromkollektors (110) auf einer Beschichtungswalze (120), die eine Stufe (125) aufweist, die mit einer Breite ausgerichtet ist, die schmaler als die Beschichtungsbreite ist, in welcher die Elektrodenaktivmaterialschicht (130, 130') abgeschieden wird, und durch Abgeben von Slurry durch einen Slot-Die-Beschichter (140), um die Elektrodenaktivmaterialschicht (130, 130') auf der Stufe (125) abzuscheiden; und
Beschichten einer hinteren Oberfläche des Stromkollektors (110) durch Umdrehen des Stromkollektors (110) mit der beschichteten oberen Oberfläche, um ihn auf einer Beschichtungswalze (160) ohne Stufe (125) zu platzieren, und durch Abgeben von Slurry durch einen Slot-Die-Beschichter (140), um eine zusätzliche Elektrodenaktivmaterialschicht (130, 130') an einer Position abzuscheiden, die mit der Elektrodenaktivmaterialschicht (130, 130') ausgerichtet ist.

7. Verfahren zum Herstellen einer Elektrode für eine Sekundärbatterie nach Anspruch 6, wobei die Beschichtungswalze (120) mit der gebildeten Stufe (125) ein lokal angebrachtes Band (150a) umfasst.

8. Verfahren zum Herstellen einer Elektrode für eine Sekundärbatterie nach Anspruch 6, wobei die Beschichtungswalze (120) mit der gebildeten Stufe (125) eine lokal gebildete Metall- oder Metalllegierungsbeschichtungsschicht umfasst.

9. Verfahren zum Herstellen einer Elektrode für eine Sekundärbatterie nach Anspruch 6, wobei ein Beschichtungsspaltunterschied zwischen den Rand-/Mittelabschnitt-Matrizenlippen des Slot-Die-Beschichters (140) und des Stromkollektors (110) durch die Stufe (125) hergestellt wird.

10. Verfahren zum Herstellen einer Elektrode für eine Sekundärbatterie nach Anspruch 9, wobei das Gleiten in dem Beschichtungsprofil der Elektrodenaktivmaterialschicht (130, 130') verringert wird, indem ermöglicht wird, dass das Slurry in die Seite der Stufe (125) fließt.

11. Vorrichtung (200) zum Herstellen einer Elektrode für eine Sekundärbatterie, umfassend:
eine Beschichtungswalze (120) zum Beschichten einer oberen Oberfläche, die eine Stufe (125) aufweist, die mit einer Breite ausgerichtet ist, die schmaler als die Beschichtungsbreite ist, in welcher die Elektrodenaktivmaterialschicht (130, 130') auf einem Stromkollektor (110) abgeschieden wird;
eine Beschichtungswalze (160) zum Beschichten einer hinteren Oberfläche des Stromkollektors (110) nach dem Beschichten der oberen Oberfläche ohne Stufe (125);
wobei die Stufe (125) eingerichtet ist, um künstlich einen Beschichtungsspalt in einem Gleitabschnitt an beiden Enden eines beschichteten Abschnitts des Stromkollektors (110) in der Breitenrichtung zu erzeugen; und
einen Slot-Die-Beschichter (140).

12. Vorrichtung (200) zum Herstellen einer Elektrode für eine Sekundärbatterie nach Anspruch 11, wobei die Beschichtungswalze (120) zum Beschichten der oberen Oberfläche ein lokal angebrachtes Band (150a) umfasst.

13. Vorrichtung (200) zum Herstellen einer Elektrode für eine Sekundärbatterie nach Anspruch 11, wobei die Beschichtungswalze (120) zum Beschichten der oberen Oberfläche eine lokal gebildete Metall- oder Metalllegierungsbeschichtungsschicht umfasst.

14. Vorrichtung (200) zum Herstellen einer Elektrode für eine Sekundärbatterie nach Anspruch 11, wobei ein Beschichtungsspaltunterschied zwischen den Rand-/Mittelabschnitt-Matrizenlippen des Slot-Die-Beschichters (140) und des Stromkollektors (110), der auf der Beschichtungswalze (120, 160) zum Beschichten der oberen Oberfläche platziert ist, durch die Stufe (125) hergestellt wird.

15. Vorrichtung (200) zum Herstellen einer Elektrode für eine Sekundärbatterie nach Anspruch 11, wobei die Beschichtungswalze (120) zum Beschichten der oberen Oberfläche mit einer Stufe (125) ausgebildet ist, die eine höhere Höhe in dem Mittelabschnitt im Vergleich zu beiden Rändern der Elektrodenaktivmaterialschicht (130, 130') aufweist.

## Revendications

1. Procédé de fabrication d'une électrode pour une batterie secondaire, comprenant l'étape de création d'un gradin artificiel (115) dans le collecteur de courant (110) et l'enduction d'une couche de matière active d'électrode (130, 130') sur le gradin artificiel (115), **caractérisé en ce que** le gradin artificiel (115) est configuré pour créer artificiellement un espace d'enduction dans un élément coulissant aux deux bouts d'une partie enduite du collecteur de courant (110) dans le sens de la largeur afin de permettre l'écoulement de la suspension dans le côté du gradin (115) afin de réduire la longueur de coulissement de la couche de matière active d'électrode (130).

2. Procédé de fabrication d'une électrode pour une batterie secondaire selon la revendication 1, un ruban (150a) étant fixé localement sur un rouleau enducteur (120) sur lequel le collecteur de courant (110) est placé afin de créer un gradin artificiel (115) dans le collecteur de courant (110).

3. Procédé de fabrication d'une électrode pour une batterie secondaire selon la revendication 1, une couche d'enduction en métal ou en alliage métallique étant formée localement sur un rouleau enducteur (120) sur lequel est placé le collecteur de courant (110) afin de créer un gradin artificiel (115) dans le collecteur de courant (110).

4. Procédé de fabrication d'une électrode pour une batterie secondaire selon la revendication 1, comprenant en outre l'étape d'enduction d'une couche additionnelle de matière active d'électrode (130, 130') dans une position alignée avec la couche de matière active d'électrode (130, 130') sur la surface opposée du collecteur de courant (110) enduite avec la couche de matière active d'électrode (130, 130').

5. Procédé de fabrication d'une électrode pour une batterie secondaire selon la revendication 2 ou 3, comprenant en outre l'étape d'enduction d'une couche additionnelle de matière active d'électrode (130, 130') dans une position alignée avec la couche de matière active d'électrode (130, 130') sur la surface opposée du collecteur de courant (110) enduite avec la couche de matière active d'électrode (130, 130') en déroulant le rouleau d'enroulement dans le sens opposé, après l'enduction, le séchage, et l'enroulement de la couche de matière active d'électrode (130, 130') avec le rouleau d'enroulement tout en entraînant le collecteur de courant (110) au-dessus du rouleau enducteur (120, 160).

6. Procédé de fabrication d'une électrode pour une batterie secondaire, comprenant les étapes suivantes :
enduction d'une surface supérieure du collecteur de courant (110) en plaçant le collecteur de courant (110) sur un rouleau enducteur (120) possédant un gradin (125) aligné avec une largeur plus étroite que la largeur de l'enduction où la couche de matière active d'électrode (130, 130') est enduite, et en déchargeant la suspension à travers un dispositif d'enduction à matrice à fentes (140) pour enduire la couche de matière active d'électrode (130, 130') sur le gradin (125) ; et
enduction d'une surface postérieure du collecteur de courant (110) en inversant le collecteur de courant (110) avec la surface supérieure enrobée pour la placer sur un rouleau enducteur (160) sans gradin (125), et en déchargeant la suspension par un dispositif d'enduction à matrice à fentes (140) pour enrober une couche de matière active d'électrode (130, 130') additionnelle dans une position alignée avec la couche de matière active d'électrode (130, 130').

7. Procédé de fabrication d'une électrode pour une batterie secondaire selon la revendication 6, le rouleau enducteur (120) avec le gradin (125) formé comprenant un ruban fixé localement (150a).

8. Procédé de fabrication d'une électrode pour une batterie secondaire selon la revendication 6, le rouleau enducteur (120) avec le gradin (125) formé comprenant une couche d'enduction en métal ou en alliage métallique formée localement.

9. Procédé de fabrication d'une électrode pour une batterie secondaire selon la revendication 6, une différence d'espace d'enduction entre les lèvres de la filière de la partie marginale/centrale du dispositif d'enduction à matrice à fentes (140) et du collecteur de courant (110) étant réalisée à travers le gradin (125).

10. Procédé de fabrication d'une électrode pour une batterie secondaire selon la revendication 9, le coulissement dans le profil de revêtement de la couche de matière active d'électrode (130, 130') étant réduit en permettant l'écoulement de la suspension dans le côté du gradin (125).

11. Dispositif (200) de fabrication d'une électrode pour une batterie secondaire, comprenant :
un rouleau enducteur (120) pour une surface supérieure possédant un gradin (125) aligné avec une largeur plus étroite que la largeur d'enduction où la couche de matière active d'électrode (130, 130') est enduite sur un collecteur de courant (110) ;
un rouleau enducteur (160) pour l'enduction d'une surface postérieure du collecteur de courant (110) suivant l'enduction de la surface supérieure sans gradin (125) ;
le gradin (125) étant configuré pour créer artificiellement un espace d'enduction dans un élément coulissant aux deux bouts d'une partie enduite du collecteur de courant (110) dans le sens de la largeur, et un dispositif d'enduction à matrice à fentes (140).

12. Dispositif (200) de fabrication d'une électrode pour une batterie secondaire selon la revendication 11, le rouleau enducteur (120) pour la surface supérieure comprenant un ruban fixé localement (150a).

13. Dispositif (200) de fabrication d'une électrode pour une batterie secondaire selon la revendication 11, le rouleau enducteur (120) pour la surface supérieure comprenant une couche d'enduction en métal ou en alliage métallique formée localement.

14. Dispositif (200) de fabrication d'une électrode pour une batterie secondaire selon la revendication 11, une différence d'espace d'enduction entre les lèvres de la filière de la partie marginale/centrale du dispositif d'enduction à matrice à fentes (140) et du collecteur de courant (110) placés sur le rouleau enducteur (120, 160) pour l'enduction de la surface supérieure étant réalisée à travers le gradin (125).

15. Dispositif (200) de fabrication d'une électrode pour une batterie secondaire selon la revendication 11, le rouleau enducteur (120) pour la surface supérieure étant formée avec un gradin (125) dont la hauteur est supérieure dans la partie centrale par rapport aux deux côtés de la couche de matière active d'électrode (130, 130').
